# EUROPEAN PATENT SPECIFICATION

(11) **EP 2 977 235 B1**
(45) Date of publication and mention of the grant of the patent: **12.10.2016**
(21) Application number: 14184384.7
(22) Date of filing: 11.09.2014
(51) Int. Cl.: B60C 25/05

(54) **Tire dismounting hook apparatus and tire dismounting device**
Hakenvorrichtung zur Reifendemontage und Reifendemontagevorrichtung
Appareil de crochet de démontage de pneus et dispositif de démontage de pneus

(30) Priority: 22.07.2014 CN 201410354045
(43) Date of publication of application: 27.01.2016
(73) Proprietor: Bright Technology Co., Ltd., Yingkou City, Liaoning 115001 (CN)
(72) Inventor: Cheng, Jiyong, 115001 Yingkou City (CN); Huang, Jiahong, 115001 Yingkou City (CN); Zhang, Yong, 115001 Yingkou City (CN)
(74) Representative: Zermani, Umberto

(56) References cited:
- EP-A1- 2 233 325
- EP-A1- 2 735 457
- CN-Y- 200 957 750

## Description

### CROSS-REFERENCE TO RELATED APPLICATION

This application claims priority to Chinese Patent Application No. 201410354045.9 filed on July 22, 2014.

### TECHNICAL FIELD

The present invention relates to the field of designing a tire dismounting device, in particular to a tire dismounting hook apparatus and a tire dismounting device. Such a device is known from EP-A1-2233 325.

### BACKGROUND

A pneumatic tire dismounting hook according to a conventional art has a simple structure, and provides a practicability and credibility, but has the following shortcomings. First, a stand of the tire dismounting hook easily interferes with a tire of a vehicle during dismounting of the tire. Second, a service life of the cylinder is shortened by an inevitable unilateral wear and tear.

### SUMMARY

It is an object of the present invention to provide a tire dismounting hook apparatus and a tire dismounting device, which avoids an interference between a stand of the tire dismounting hook apparatus and a tire of a vehicle and restricts a shortening of a cylinder service life.

In order to solve the above-described technical problems, an embodiment of the present invention provides a tire dismounting hook, which is applied to a tire dismounting device and includes a cylinder and a tube assembly connected with the cylinder.

The tire dismounting hook apparatus further includes a stand, a curved lever, a linkage mechanism, and a tire dismounting hook. The stand is connected with one end of the cylinder, which is positioned close to a piston rod of the cylinder. The curved lever is disposed in the stand and is hinged with the piston rod. An arc groove having a predetermined width being disposed on the curved lever, a roll wheel is disposed in the arc groove in contact with an inner wall of the arc groove, and a roll shaft corresponding to the roll wheel is disposed in the stand. The roll shaft penetrates through the roll wheel. The linkage mechanism is hinged with one end of the curved lever, which is positioned apart from the piston rod. One end of the linkage mechanism, which is positioned apart from the curved lever, extends to an outside of the stand. The tire dismounting hook is hinged with the one end of the linkage mechanism, which is positioned apart from the curved lever. When a piston of the cylinder protrudes, the piston rod drives the curved lever to move in a protruding direction of the piston and the curved lever moves along the arc groove in a direction moving away from the piston rod causing a movement of the tire dismounting hook in the protruding direction of the piston and in the direction moving away from the piston rod.

The cylinder is connected with the stand by a flange structure.

The linkage mechanism includes a first swing arm and a second swing arm, each of which is hinged with the stand at one end and is hinged with the tire dismounting hook at the other end. The second swing arm is disposed under the first swing arm and is disposed farther than the first swing arm with respect to the curved lever. The one end of the curved lever positioned apart from the piston rod is hinged with an arm body of the first swing arm.

The first swing arm includes a first portion and a second portion angled with each other by a predetermined angle. One end of the first portion, which is apart from the second portion, is hinged with the stand, and one end of the second portion, which is apart from the first portion, is hinged with the tire dismounting hook. The second swing arm is disposed parallel to the second portion.

Two ends of the roll shaft are fixed to the stand in one horizontal direction and shield rings are disposed at a fixing position of the roll shaft to the stand.

The curved lever is hinged with the piston rod via a piston rod joint and a spring pad is disposed at a hinge position of the curved lever and the piston rod joint.

The tire dismounting hook apparatus further includes a tire dismounting device bird head connected with one end of the stand and disposed on a first surface of the stand. The one end of the stand is positioned apart from the cylinder. The first surface is a surface that is positioned opposite to the piston rod.

The tire dismounting hook apparatus further includes a rim protection mat connected with the one end of the stand, which is positioned apart from the cylinder, and connected with the tire dismounting device bird head. The rim protection mat is disposed on a second surface of the stand. The second surface is a surface that is positioned opposite to the cylinder.

The tire dismounting hook apparatus further includes a control valve assembly that controls an operation state of the cylinder. The control valve assembly is connected with the cylinder.

In order to solve the above-described technical problems, the present invention provides a tire dismounting device includes above-described tire dismounting hook apparatus.

The present invention provides the following advantages.

The tire dismounting hook apparatus according to the present invention includes a cylinder and a tube assembly connected with the cylinder, and further includes a stand, a curved lever, a linkage mechanism, and a tire dismounting hook. The stand is connected with one end of the cylinder, which is positioned close to a piston rod of the cylinder. The curved lever is disposed in the stand and is hinged with the piston rod. An arc groove having a predetermined width is disposed on the curved lever, a roll wheel is disposed in the arc groove, and a roll shaft corresponding to the roll wheel is disposed in the stand. The roll shaft penetrates through the roll wheel. The linkage mechanism is connected with one end of the curved lever, which is positioned apart from the piston rod. The tire dismounting hook is hinged with the one end of the linkage mechanism, which is positioned apart from the curved lever and extends to an outside of the stand. When a piston of the cylinder protrudes, the piston rod drives the curved lever to move in a protruding direction of the piston and the curved lever moves along the arc groove in a direction moving away from the piston rod causing a movement of the tire dismounting hook in the protruding direction of the piston and in the direction moving away from the piston rod.

Thus, the present invention provides a flexibility of using the tire dismounting hook apparatus, reduces a size of the tire dismounting hook apparatus, improves an assembly process, avoids an interference between the stand and the tire, improves an efficiency of tire dismounting work, and extends a service life of the cylinder.

### BRIEF DESCRIPTION OF THE DRAWINGS

Fig. 1 is a diagram showing a tire dismounting hook apparatus according to a prior art;
Fig. 2 is a diagram showing an incomplete exploded view of a tire dismounting hook apparatus according to the present invention;
Fig. 3 is a diagram showing a configuration of a tire dismounting hook apparatus according to the present invention;
Fig. 4 is a diagram showing a linkage mechanism of a tire dismounting hook apparatus according to the present invention; and
Fig. 5 is a diagram showing a configuration of a tire dismounting hook included in the tire dismounting hook apparatus.

### Explanation of Reference Numerals

1-tube assembly, 2-cylinder, 3-stand, 4-countersunk head screw, 5-tire dismounting device bird head, 6-rim protection mat, 7-screw pin, 8-small countersunk head screw, 9-tire dismounting hook, 91-first hinge hole, 92-second hinge hole, 93-hook shape member, 10-second swing arm, 11-first swing arm, 111-first portion, 112-second portion, 12-short hinge shaft, 121-first short hinge shaft, 122-second short hinge shaft, 123-third short hinge shaft, 13-long hinge shaft, 131-first long hinge shaft, 132-second long hinge shaft, 14-shield ring, 15-roll shaft, 16-roll wheel, 17-curved lever, 18-fastening screw, 19-spring pad, 20-drive shaft, 21-piston rod joint, 22-hexagonal slim nut, 23- hexagonal nut, 24-control valve assembly, 25-cap nut.

### DETAILED DESCRIPTION

To make the objects, the technical solutions and the advantages of the present invention more apparent, the following will describe embodiments of the present invention with reference to accompanying drawings.

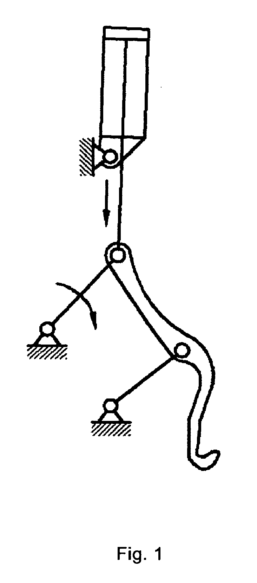

As shown in Fig. 1, a structure of a pneumatic tire dismounting hook apparatus according to a prior art is typical four-bar tire dismounting mechanism. The pneumatic tire dismounting hook apparatus according to the prior art has a simple structure and provides a practicability and a credibility, but has the following shortcomings. First, a lower hinge hole of a cylinder piston rod, an upper hinge hole of an upper rocker, an upper hinge hole of a hook form a common hinge joint. Since the three hinge holes are arranged in a horizontal direction, a size of the common hinge joint in the horizontal direction is increased. In order to accommodate an up-and-down movement of the piston rod, a horizontal dimension of a stand of the tire dismounting hook needs to be increased. However, when the horizontal dimension of a stand of the tire dismounting hook is increased, the stand of the tire dismounting hook interferes with a tire of a vehicle during dismounting of the tire. Second, a hinge joint structure makes a front portion of the cylinder being hanged when the cylinder is mounted. Thus, during an operation of the cylinder, the piston rod continually swings during an expand operation and a retract operation with a position change of the common hinge joint. With an increase of use time, a service life of the cylinder is shortened by an inevitable unilateral wear and tear.

The tire dismounting hook apparatus according to an embodiment of the present invention reduces a body size of the mechanism, improves an assembly technique, makes structures compact, provides stable and reliable performance, provides improved fire dismounting operation, improves an operating condition of the cylinder, and extends a service life of the cylinder.

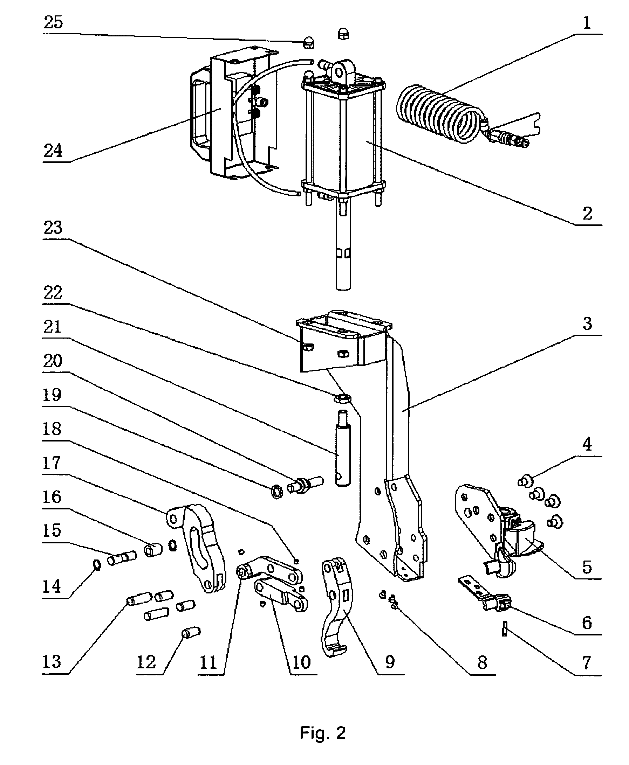

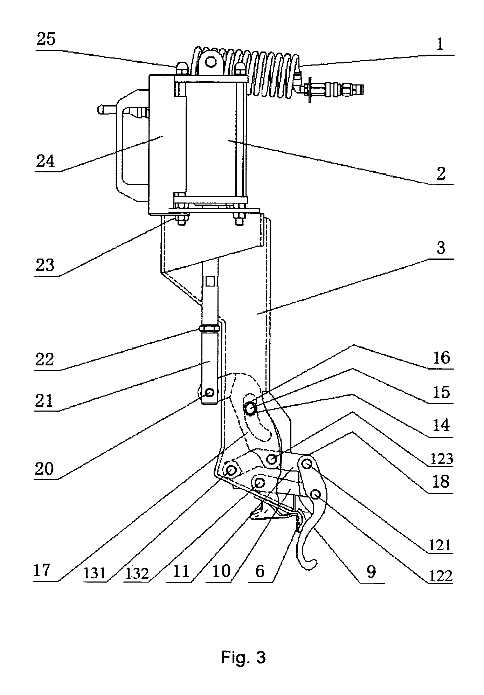

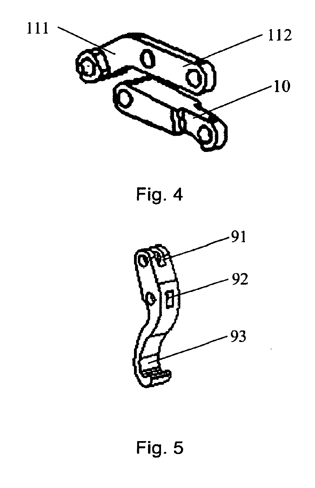

As shown in Fig. 2 to Fig. 5, a tire dismounting hook apparatus according to an embodiment of the present invention is applied to a tire dismounting device. The tire dismounting hook apparatus includes a cylinder 2 and a tube assembly 1 connected with the cylinder 2.

The tire dismounting hook apparatus further includes a stand connected with one end of the cylinder 2 which is positioned close to a piston rod of the cylinder 2. A curved lever 17 hinged with the piston rod is provided in the stand 3. An arc groove having a predetermined width is disposed on the curved lever 17, a roll wheel 16 is disposed in the arc groove in contact with an inner wall of the arc groove, a roll shaft 15 corresponding to the roll wheel 16 is disposed in the stand 3, and the roll shaft 15 penetrates through the roll wheel 16. A linkage mechanism hinged with one end of the curved bar 17 which is positioned apart from the piston rod, One end of the linkage mechanism, which is positioned apart from the curved lever 17, extends to an outside of the stand 3. A tire dismounting hook 9 hinged with the one end of the linkage mechanism which is positioned apart from the curved bar 17. When a piston of the cylinder 2 protrudes, the piston rod drives the curved lever 17 to move in a protruding direction of the piston and the curved lever 17 moves along the arc groove in a direction moving away from the piston rod causing a movement of the tire dismounting hook 9 in the protruding direction of the piston and in the direction moving away from the piston rod.

In the dismounting hook apparatus according to the embodiment of the present invention, when gas is charged to the cylinder 2 via the tube assembly 1 and the piston of the cylinder 2 protrudes, the piston rod drives the curved lever 17 to move in a protruding direction of the piston, and at the same time, the roll wheel 16 disposed on the curved lever 17 rolls on the roll shaft 15 causing a movement of the curved lever 17 along the arc groove in a direction moving away from the piston rod. Thus, the curved lever 17 drives the tire dismounting hook 9 to move in the protruding direction of the piston and in the direction moving away from the piston rod.

When the gas in the cylinder 2 is discharged via the tube assembly 1 and the piston retracts, the piston rod drives the curved lever 17 to move in a retracting direction of the piston. At the same time, the roll wheel 16 disposed on the curved lever 17 rolls on the roll shaft 15, and drives the curved lever 17 to move along arc groove in a direction approaching to the piston rod. Thus, the curved lever 17 drives the tire dismount hook 9 to move in the retracting direction of the piston and in the direction approaching to the piston rod.

With above-described configuration, a flexibility of using the tire dismounting hook apparatus 9 is improved, a size of the tire dismounting hook apparatus reduced, an assembly process is improved, an interference between the stand 3 and a tire is avoided, an efficiency of tire dismounting work is improved, and a service life of the cylinder 2 is extended. Specifically, the stand 3 is provided by a welded element. Thus, a robustness of the tire dismounting hook apparatus is secured.

The roll wheel 16 is able to roll along the arc groove. For example, a diameter of the roll wheel 16 is equal to a width of the arc groove.

Preferably, the cylinder 2 is connected with the stand 3 by a flange structure.

In this case, the cylinder 2 may be fixed to an upper portion of the stand 3 in a flange fastening manner at its front end. With this structure, a movement of the piston rod is pure expanding and retracting operation. Thus, compared with a structure in which the cylinder 2 is equipped in a front-hanged or rear-hanged manner, using flange fastening manner to fix the front end provides a simple assembly, adjustment and maintenance. Further, since a working condition of the cylinder 2 is improved, the service life of the cylinder 2 is extended.

According to an embodiment of the present disclosure, the linkage mechanism may include a first swing arm 11 and a second swing arm 10, each of which is hinged with the stand 3 at one end and is hinged with the tire dismounting hook 9 at the other end. The second swing arm 10 is disposed under the first swing arm 11 and is disposed farther than the first swing arm 11 with respect to the curved lever 17. The one end of the curved lever 17, which is positioned apart from the piston rod, is hinged with an arm body of the first swing arm 11.

At this time, when the curved lever 17 moves together with the piston of the cylinder 2, the first swing arm 11, under an operation of the curved lever 17, drives the tire dismounting hook 9 to generate a relative movement. Thus, a normal use of the tire dismounting hook is achieved, and the second swing arm 10 secures a stability of the tire dismounting hook 9 during the movement in order to restrict a random swing movement of the tire dismounting hook. Thus, an efficiency of the tire dismounting work is improved, and a stability of the apparatus is improved.

The first swing arm 11 is hinged with a first hinge hole 91 of the tire dismounting hook 9, which is apart from the hook shape member 93. The second swing arm 10 is hinged with a second hinge hole 92 of the tire dismounting hook 9. The second hinge hole 92 is disposed between the first hinge hole 91 and the hook shape member 93.

Further, the first swing arm 11 may be hinged with the stand 3 via a first long hinge shaft 131 at an inside portion of the stand 3. The first long hinge shaft 131 may be fixed using a fastening screw 18. The second swing arm 10 may be hinged with the stand 3 via a second long hinge shaft 132 at an inside portion of the stand 3. The second long hinge shaft 132 may be fixed using a fastening screw 18. The first hinge hole 91 of the tire dismounting hook 9 may be hinged with the first swing arm 11 by a first short hinge shaft 121. The first short hinge shaft 121 may be fixed using a fastening screw 18. The second hinge hole 92 of the tire dismounting hook 9 may be hinged with the second swing arm 10 by a second short hinge shaft 122. The second short hinge shaft 122 may be fixed using a fastening screw 18. The curved lever 17 may be hinged with the arm body of the first swing arm 11 by a third short hinge shaft 123. The third short hinge shaft 123 may be fixed using a fastening screw 18.

With above configuration, a stability of the hinge structure is improved by the long hinge shaft 13, short hinge shaft 12 and the fastening screws 18.

Specifically, the first swing arm 11 includes a first portion 111 and a second portion 112 angled with each other by a predetermined angle. One end of the first portion 111, which is apart from the second portion 112, is hinged with the stand 3. One end of the second portion 112, which is apart from the first portion 111, is hinged with the tire dismounting hook 9. The second swing arm 10 is disposed parallel to the second portion 112.

With above configuration, since the second swing arm 10 is parallel to the second portion 112 of the first swing arm 11, an interference between the two parts is avoided. Thus, a stable control to the tire dismounting hook 9 is secured, operability is improved, and tire dismounting quality is improved.

In an embodiment of the present invention, two ends of the roll shaft 15 are fixed to the stand 3 in one horizontal direction, and a shield ring 14 is disposed at a fix position of the roll shaft 15 to the stand 3.

With above configuration, the roll shaft is connected with the stand 3 in a two-ends supporting manner. Thus, a stability of the connection is secured. Further, at a fix position of the roll shaft 15 to the stand 3, the shield ring 14 is disposed. The shield ring 14 may be provided by a elastic shield ring. Thus, a bearing pressure at the fix position between the roll shaft 15 and the stand 3 is reduced. With this configuration, a damage caused by an interaction force between the roll shaft 15 and the stand 3 is avoided, and a stability and safety of the apparatus is improved.

In an embodiment of the present invention, the curved lever 17 is hinged with the piston rod via a piston rod joint 21, and a spring pad 19 is disposed at a hinge position between the curved lever 17 and the piston rod joint 21.

With above configuration, since the curved lever 17 is hinged with the piston rod via the piston rod joint 21, the apparatus provides a simple mounting and dismounting, provides an easy replacement and adjustment, and improves an usefulness. Since the spring pad 19 is disposed at the hinge position between the curved lever 17 and the piston rod joint 21, an improved cushioning effect is provided and a stability of the apparatus is improved.

Specifically, the curved lever 17 may be hinged with the piston rod joint 21 via a drive shaft 20 . The piston rod joint 21 may be connected with the piston rod via a hexagonal slim nut 22. This configuration secures a mounting stability, simplifies a dismounting work, and provides easy adjustment.

According to an embodiment of the present invention, the tire dismounting hook apparatus may further include a tire dismounting device bird head 5. The tire dismounting device bird head 5 is connected with one end of the stand 3, which is positioned apart from the cylinder 2. The tire dismounting device bird head 5 is also disposed on a first surface of the stand 3, which is positioned opposite to the piston rod.

With above configuration, the tire dismounting device bird head 5 improves an operation precision of the apparatus with respect to the tire, and enables a smooth and speedy tire dismounting work. The tire dismounting device bird head 5 is disposed on the surface of the stand 3, which is opposite to the piston rod. Thus, an operation of the tire dismounting hook 9 is not adversely affected by the dismounting device bird head 5, achieves a proper arrangement of the components, and a stable operation of the apparatus.

In an embodiment of the present invention, the tire dismounting hook apparatus may further include a rim protection mat 6 connected with the one end of the stand 3, which is positioned apart from the cylinder 2, and connected with the tire dismounting device bird head 5. The rim protection mat 6 is disposed on a second surface of the stand 3, which is positioned opposite to the cylinder 2.

With above configuration, during the dismounting of the tire, the rim protection mat 6 protects a rim of the tire, and secures a safety and stability during the dismounting of the tire and improves a tire dismounting quality. The rim protection mat 6 is disposed on the surface of the stand 3opposite to the cylinder 2. Thus, an operation of the tire dismounting hook 9 and the tire dismounting device bird head 5 is not adversely affected by the rim protection mat 6, and achieves a proper arrangement of the components, and secures a stable operation of the apparatus.

Specifically, the tire dismounting device bird head 5 may be fixed to the stand 3 via multiple countersunk head screws 4. One end of the rim protection mat 6 may be connected with the tire dismounting device bird head 5 through a screw pin 7. The other end of the rim protection mat 6 may be fixed to the stand 3 via multiple small countersunk head screws 8. This configuration provides a stable mounting and also provides a simple dismounting.

In order to provide a proper control for the cylinder 2, the tire dismounting hook apparatus may further include a control valve assembly 24 that controls an operation state of the cylinder 2and is connected with the cylinder 2.

With above configuration, a simple control for the cylinder 2 is provided by the control valve assembly 24. Accordingly, the configuration proves a simple operation to the user, and improves a practicality and convenience of the apparatus.

Specifically, the control valve assembly 24 may be attached to a side surface of the cylinder 2 via a hexagonal nut 23 and a cap nut 25. Accordingly, the configuration secures a mounting stability and simple dismounting, and will not affect a normal operation of other components.

The following will describe an example of a specific embodiment of the present invention.

As shown in Fig. 2 to Fig. 5, the tire dismounting hook apparatus according to one embodiment of the present invention includes a cylinder 2 and a tube assembly 1 connected with the cylinder 2, a control valve assembly 24 fixed to the side surface of the cylinder 2 via the hexagonal nut 23 and the cap nut 25. The tire dismounting hook apparatus further includes a stand 3 connected with one end of the cylinder 2, which is positioned close to the piston rod of the cylinder 2, a tire dismounting device bird head 5 connected with one end of the stand 3, which is positioned apart from the cylinder 2, a rim protection mat 6 respectively connected with the stand 3 and the tire dismounting device bird head 5. The cylinder 2 is fixed to the upper portion of the stand 3 in a flange fastening manner at its front end. The tire dismounting device bird head 5 is fixed to the side surface of the lower portion of the stand 3 via four countersunk head screws 4. One end of the rim protection mat 6 is connected with the tire dismounting device bird head 5 via the screw pin penetrated through it. The other end of the rim protection mat 6 is fixed to the lower portion of the stand 3 via the small countersunk head screw 8.

In the stand 3, the curved lever 17 is disposed. The curved lever 17 is hinged with the piston rod joint 21 via the drive shaft 20. The spring pad 19 is disposed between them to prevent them from loosing. The piston rod joint 21 is connected with the piston rod of the cylinder 2 through the hexagonal slim nut 22. On the curved lever, the arc groove having a predetermined width is disposed. In the arc groove, the roll wheel 16 is disposed in contact with the inner wall of the arc groove. In the stand, the roll shaft 15 corresponding to the roll wheel 16 is disposed. The roll shaft 15 penetrates through the roll wheel 16. Two ends of the roll shaft 15 are fixed to the stand 3 in one horizontal direction viaelastic shield rings The roll wheel 16 has the diameter, which is equal to the width of the arc groove, so that the roll wheel 16 rolls along the arc groove.

The linkage mechanism is hinged with one end of the curved lever, which is positioned apart from the piston rod. One end of the linkage mechanism, which is positioned apart from the curved lever 17, extends to an outside of the stand 3 and is hinged with the tire dismounting hook 9. The linkage mechanism includes the first swing arm 11 and the second swing arm 10. The curved lever 17 is hinged with the arm body of the first swing arm 11. The first swing arm 11 includes the first portion 111 and the second portion 112 angled with each other by a predetermined angle. One end of the first portion 111, which is apart from the second portion 112, is hinged with the stand 3. One end of the second portion 112, which is apart from the first portion 111, is hinged with the first hinge hole 91 of the tire dismounting hook 9. The second swing arm 10 is disposed under the first swing arm 11, and is disposed farther than the first swing arm 11 with respect to the curved lever 17. The second swing arm 10 is disposed parallel to the second portion 112 of the first swing arm 11. One end of the second swing arm 10 is hinged with the stand 3, and the other end of the second swing arm 10 is hinged with the second hinge hole 92 of the tire dismounting hook 9. The second hinge hole 92 is disposed between the first hinge hole 91 and the hook shape member 93 of the tire dismounting hook 9.

The first swing arm 11 is hinged with the stand 3 via the first long hinge shaft 131 in the stand 3. The second swing arm 10 is hinged with the stand 3 via the second long hinge shaft 132 in the stand 3. The first hinge hole 91 of the tire dismounting hook 9 is hinged with the first swing arm 11 by the first short hinge shaft 121. The second hinge hole 92 of the tire dismounting hook 9 is hinged with the second swing arm 10 by the second short hinge shaft 122. The curved lever 17 is hinged with the arm body of the first swing arm 11 by the third short hinge shaft 123. The first long hinge shaft 131, the second long hinge shaft 132, the first short hinge shaft 121, the second short hinge shaft 122, the third short hinge shaft 123 are fixed by the fastening screws 18.

When using the apparatus, the control valve assembly 24 controls the piston rod of the cylinder 2 to protrude out and move in a downward direction. Thus, the piston rod joint 21 moves downward in a vertical direction. An protruding force is applied to the curved lever 17 via the drive shaft 20. Thus, the curved lever 17 moves in the downward direction. Since the roll shaft 15 is hinged with the stand 3 and the roll wheel 16 is only able to perform a rolling movement, the curved lever 17 moves downward under an operation of the arc groove, and at the same time, swings outward with the drive shaft 20 as an axis. The first swing arm 11, under an operation of the curved lever 17, drives the tire dismounting hook 9 to move downward.

When operating the control valve assembly 24 in an opposite direction to make the piston rod 2 retract and move in an upward direction, the piston rod joint 21 moves upward in the vertical direction. A retract force is applied to the curved lever 17 via the drive shaft 20. Thus, the curved lever moves upward. Since the roll shaft 15 is hinged with the stand 3 and the roll wheel 16 is only able to perform a rolling movement, the curved lever 17 moves upward under an operation of the arc groove, and at the same time, swings inward with the drive shaft 20 as an axis. The first swing arm 11, under an operation of the curved lever 17, drives the tire dismounting hook 9 to move upward.

The tire dismounting hook apparatus according to foregoing embodiments of the present invention reduces a size of the tire dismounting hook apparatus, improves an assembly process, provides a stable performance compact structure, provides a stable and reliable performance, provides a simple adjustment and maintenance, improves an efficiency of tire dismounting work, and improves a working condition of the cylinder 2, and extends a service life of the cylinder.

The tire dismounting hook apparatus according to the present invention is applied to a tire dismounting device. Thus, according to another embodiment of the present invention, a tire dismounting device including the above-described tire dismounting hook apparatus is provided. All of the foregoing embodiments that provide the tire dismounting hook apparatus are also applied to the embodiment of the tire dismounting device, and provide similar technical advantages.

The above is a preferred embodiment of the present invention, it should be noted that for a person skilled in the art, improvements and modifications can be made based on the scope of the present invention according to the appended claims.

## Claims

1. A tire dismounting hook apparatus applied to a tire dismounting device, comprising
a cylinder (2),
a tube assembly (1) connected with the cylinder (2),
a stand (3) connected with one end of the cylinder (2) closing to a piston rod of the cylinder (2);
a curved lever (17) disposed in the stand (3) and hinged with the piston rod; wherein, an arc groove having a predetermined width being disposed on the curved lever (17), a roll wheel (16) being disposed in the arc groove in contact with an inner wall of the arc groove, and a roll shaft (15) corresponding to the roll wheel (16) being disposed in the stand (3), the roll shaft (15) penetrating through the roll wheel (16);
a linkage mechanism hinged with one end of the curved lever (17) apart from the piston rod, one end of the linkage mechanism apart from the curved lever (17) extending out of the stand (3); and
a tire dismounting hook (9) hinged with the one end of the linkage mechanism apart from the curved lever (17),
when a piston of the cylinder (2) protrudes, the piston rod drives the curved lever (17) to move in a protruding direction of the piston and the curved lever (17) moves along the arc groove in a direction moving away from the piston rod, and the curved lever (17) drives the tire dismounting hook (9) to move in the protruding direction of the piston and in the direction moving away from the piston rod.

2. The tire dismounting hook apparatus according to claim 1, wherein, the cylinder (2) is connected with the stand (3) by a flange structure.

3. The tire dismounting hook apparatus according to claim 1, wherein, the linkage mechanism further comprises:
a first swing arm (11) and a second swing arm (10), each of which is hinged with the stand (3) at one end and is hinged with the tire dismounting hook (9) at the other end, wherein:
the second swing arm (10) is disposed under the first swing arm (11) and is disposed farther than the first swing arm (11) with respect to the curved lever (17);
the one end of the curved lever (17) apart from the piston rod, is hinged with an arm body of the first swing arm (11).

4. The tire dismounting hook apparatus according to claim 3, wherein,
the first swing arm (11) comprises a first portion (111) and a second portion (112) angled with each other by a predetermined angle, one end of the first portion (111) apart from the second portion (112) is hinged with the stand (3), and one end of the second portion (112) apart from the first portion (111) is hinged with the tire dismounting hook (9); and
the second swing arm (10) is disposed parallel to the second portion (112).

5. The tire dismounting hook apparatus according to claim 1, wherein, two ends of the roll shaft (15) are fixed to the stand (3) in one horizontal direction, and shield rings (14) are disposed at fix positions at which the roll shaft (15) is fixed to the stand (3).

6. The tire dismounting hook apparatus according to claim 1, wherein, the curved lever (17) is hinged with the piston rod via a piston rod joint (21), and a spring pad (19) is disposed at a hinge position between the curved lever (17) and the piston rod joint (21).

7. The tire dismounting hook apparatus according to claim 1, further comprising:
a tire dismounting device bird head (5) connected with one end of the stand (3) and disposed on a first surface of the stand (3), the one end of the stand (3) being positioned apart from the cylinder (2), and the first surface being a surface that is positioned opposite to the piston rod.

8. The tire dismounting hook apparatus according to claim 7, further comprising:
a rim protection mat (6) connected with the one end of the stand (3) apart from the cylinder (2), and connected with the tire dismounting device bird head (5), the rim protection mat (6) being disposed on a second surface of the stand (3), the second surface being a surface that is positioned opposite to the cylinder (2).

9. The tire dismounting hook apparatus according to claim 1, further comprising:
a control valve assembly (24) that is connected with the cylinder (2) and controls an operation state of the cylinder (2).

10. A tire dismounting device, comprising the tire dismounting hook apparatus according to any one of claims 1 to 9.

## Patentansprüche

1. Hakenvorrichtung zur Reifendemontage, angebracht an einer Reifendemontagevorrichtung, umfassend einen Zylinder (2), ein Rohraggregat (1), verbunden mit dem Zylinder (2), ein Gestell (3), verbunden mit einem Ende des Zylinders (2), schließend zu einer Kolbenstange des Zylinders (2), einen gekrümmten Hebel (17), angeordnet im Gestell (3) und mittels eines Gelenks mit der Kolbenstange verbunden, wobei eine Bogenrille eine vorgegebene Breite aufweist und auf dem gekrümmten Hebel (17) angeordnet ist, ein Laufrad (16), das in der Bogenrille im Kontakt mit einer internen Wand der Bogenrille angeordnet ist, und eine mit dem Laufrad (16) entsprechende Rollenhalterwelle (15), die im Gestell (3) angeordnet ist, wobei die Rollenhalterwelle (15) das Laufrad (16) durchdringt, einen Verbindungsmechanismus, der mittels eines Gelenks mit einem Ende des gekrümmten Hebels (17), entfernt von der Kolbenstange verbunden ist, wobei sich ein Ende des Verbindungsmechanismus, entfernt vom gekrümmten Hebel (17), außerhalb des Gestells (3) erstreckt, und einen Haken zur Reifendemontage (9), der mittels eines Gelenks mit dem einen Ende des Verbindungsmechanismus, entfernt vom gekrümmten Hebel (17), verbunden ist, wobei die Kolbenstange, wenn ein Kolben des Zylinders (2) hervorsteht, den gekrümmten Hebel (17) betätigt, um sich in eine hervorstehende Richtung des Kolbens zu bewegen, und sich der gekrümmte Hebel (17) entlang der Bogenrille in eine von der Kolbenstange wegführende Richtung bewegt, und der gekrümmte Hebel (17) den Haken zur Reifendemontage (9) betätigt, um sich in die hervorstehende Richtung des Kolbens und in die von der Kolbenstange wegführende Richtung zu bewegen.

2. Hakenvorrichtung zur Reifendemontage nach Anspruch 1, wobei der Zylinder (2) mit dem Gestell (3) durch eine Flanschstruktur verbunden ist.

3. Hakenvorrichtung zur Reifendemontage nach Anspruch 1, wobei der Verbindungsmechanismus zudem umfasst:
einen ersten Schwingarm (11) und einen zweiten Schwingarm (10), die jeweils mittels eines Gelenks mit dem Gestell (3) an einem Ende verbunden sind und mittels eines Gelenks am Haken zur Reifendemontage (9) am anderen Ende verbunden sind, wobei der zweite Schwingarm (10) unter dem ersten Schwingarm (11) und weiter entfernt als der erste Schwingarm (11) vom gekrümmten Hebel (17) angeordnet ist, wobei das eine Ende des gekrümmten Hebels (17), entfernt von der Kolbenstange, mittels eines Gelenks mit einem Armkörper des ersten Schwingarms (11) verbunden ist.

4. Hakenvorrichtung zur Reifendemontage nach Anspruch 3, wobei der erste Schwingarm (11) einen ersten Abschnitt (111) und einen zweiten Abschnitt (112) umfasst, die um einen vorgegebenen Winkel winkelig zueinander angeordnet sind, wobei ein erstes Ende des ersten Abschnitts (111) entfernt vom zweiten Abschnitt (112) mittels eines Gelenks mit dem Gestell (3) verbunden ist und ein Ende des zweiten Abschnitts (112) entfernt vom ersten Abschnitt (111) mittels eines Gelenks mit dem Haken zur Reifendemontage (9) verbunden ist und der zweiten Schwingarm (10) parallel zum zweiten Abschnitt (112) angeordnet ist.

5. Hakenvorrichtung zur Reifendemontage nach Anspruch 1, wobei zwei Enden der Rollenhalterwelle (15) am Gestell (3) in einer horizontalen Richtung fixiert sind, und Schirmringe (14) an fixen Positionen angeordnet sind, an denen die Rollenhalterwelle (15) am Gestell (3) fixiert ist.

6. Hakenvorrichtung zur Reifendemontage nach Anspruch 1, wobei der gekrümmte Hebel (17) mittels eines Gelenks mit der Kolbenstange über eine Kolbenstangenkupplung (21) verbunden ist und eine Federunterlage (19) an einer Gelenkposition zwischen dem gekrümmten Hebel (17) und der Kolbenstangenkupplung (21) angeordnet ist.

7. Hakenvorrichtung zur Reifendemontage nach Anspruch 1, zudem umfassend: einen Vogelkopf (5) für eine Reifendemontagevorrichtung, verbunden mit einem Ende des Gestells (3) und angeordnet auf einer ersten Oberfläche des Gestells (3), wobei das eine Ende des Gestells (3) entfernt vom Zylinder (2) positioniert ist und es sich bei der ersten Oberfläche um eine Oberfläche handelt, die gegenständig zur Kolbenstange positioniert ist.

8. Hakenvorrichtung zur Reifendemontage nach Anspruch 7, zudem umfassend: eine Nabenschutzmatte (6), verbunden mit dem einen Ende des Gestells (3) entfernt vom Zylinder (2) und verbunden mit dem Vogelkopf (5) für eine Reifendemontagevorrichtung, wobei die Nabenschutzmatte (6) auf einer zweiten Oberfläche des Gestells (3) angeordnet ist und es sich bei der zweiten Oberfläche um eine Oberfläche handelt, die gegenständig zum Zylinder (2) angeordnet ist.

9. Hakenvorrichtung zur Reifendemontage nach Anspruch 1, zudem umfassend: ein Steuerventilaggregat (24), das mit dem Zylinder (2) verbunden ist und einen Betriebszustand des Zylinders (2) regelt.

10. Reifendemontagevorrichtung, umfassend die Hakenvorrichtung zur Reifendemontage nach einem der Ansprüche 1 bis 9.

## Revendications

1. Crochet de démonte-pneus appliqué à un démonte-pneus, comprenant un cylindre (2), un assemblage de tube (1) relié au cylindre (2), un support (3) relié à une extrémité du cylindre (2) se fermant sur une tige de piston du cylindre (2) ; un levier incurvé (17) disposé dans le support (3) et monté articulé à la tige de piston ; dans lequel, une rainure arquée ayant une largeur prédéfinie étant disposée sur le levier incurvé (17), une roue pivotante (16) étant disposée dans la rainure arquée en contact avec une paroi intérieure de la rainure arquée, et un arbre pivotant (15) correspondant à la roue pivotante (16) étant disposé dans le support (3), l'arbre pivotant (15) pénétrant à travers la roue pivotante (16) ; un mécanisme de liaison étant monté articulé à une extrémité du levier incurvé (17) espacé de la tige de piston, une extrémité du mécanisme de liaison espacé du levier incurvé (17) se prolongeant hors du support (3) ; et un crochet de démonte-pneus (9) monté articulé à une extrémité du mécanisme de liaison espacé du levier incurvé (17), lorsqu'un piston du cylindre (2) dépasse, la tige de piston entraîne le levier incurvé (17) pour se déplacer dans une direction faisant saillie du piston et le levier incurvé (17) se déplace le long de la rainure arquée dans une direction s'éloignant de la tige de piston, et le levier incurvé (17) entraîne le crochet de démonte-pneus (9) pour se déplacer dans la direction faisant saillie du piston et dans la direction s'éloignant de la tige de piston.

2. Crochet de démonte-pneus selon la revendication 1, dans lequel le cylindre (2) est relié au support (3) par une structure à bride.

3. Crochet de démonte-pneus selon la revendication 1, dans lequel le mécanisme de liaison comprend de plus :
un premier bras oscillant (11) et un second bras oscillant (10), chacun est monté articulé au support (3) à une extrémité et est monté articulé au crochet de démonte-pneus (9) à l'autre extrémité, dans lequel : le second bras oscillant (10) est disposé sous le premier bras oscillant (11) et est disposé plus loin que le premier bras oscillant (11) par rapport au levier incurvé (17) ; ladite extrémité du levier incurvé (17) espacée de la tige de piston est montée articulée à un corps de bras du premier bras oscillant (11).

4. Crochet de démonte-pneus selon la revendication 3, dans lequel le premier bras oscillant (11) comprend une première partie (111) et une seconde partie (112) ayant réciproquement une inclinaison angulaire selon un angle prédéfini, une extrémité de la première partie (111) espacée de la seconde partie (112) est montée articulée au support (3), et une extrémité de la seconde partie (112) espacée de la première partie (111) est montée articulée au crochet de démonte-pneus (9) ; et le second bras oscillant (10) est disposé de façon parallèle sur la seconde partie (112).

5. Crochet de démonte-pneus selon la revendication 1, dans lequel deux extrémités de l'arbre pivotant (15) sont fixées au support (3) dans une direction horizontale, et des anneaux de protection (14) sont disposés au niveau de positions fixes auxquelles l'arbre pivotant (15) est fixé au support (3).

6. Crochet de démonte-pneus selon la revendication 1, dans lequel le levier incurvé (17) est monté articulé à la tige de piston par un joint de tige de piston (21), et un appui de ressort (19) est disposé au niveau d'une position de charnière entre le levier incurvé (17) et le joint de tige de piston (21).

7. Crochet de démonte-pneus selon la revendication 1, comprenant de plus : une tête démonte-pneus (5) reliée à une extrémité du support (3) et disposée sur une première surface du support (3), ladite extrémité du support (3) étant positionnée espacée à partir du cylindre (2), et la première surface étant une surface étant positionnée à l'opposé de la tige de piston.

8. Crochet de démonte-pneus selon la revendication 7, comprenant de plus : un coussinet de protection de jante (6) relié à ladite extrémité du support (3) espacée du cylindre (2), et relié à la tête démonte-pneus (5), le coussinet de protection de jante (6) étant disposé sur une seconde surface du support (3), la seconde surface étant une surface étant positionnée à l'opposé du cylindre (2).

9. Crochet de démonte-pneus selon la revendication 1, comprenant de plus : un assemblage à vanne de régulation (24) étant relié au cylindre (2) et contrôlant un état de fonctionnement du cylindre (2).

10. Démonte-pneus comprenant un crochet de démonte-pneus selon l'une quelconque des revendications de 1 à 9.
